# FASCICULE DE BREVET EUROPEEN

(11) **EP 0 505 470 B1**
(45) Date de publication et mention de la délivrance du brevet: **08.03.1995**
(21) Numéro de dépôt: 91901809.3
(22) Date de dépôt: 06.12.1990
(51) Int. Cl.: B62D 53/08

(54) **REMORQUES A MOYENS D'ATTELAGE ET CENTRAGE COMBINES**
ANHÄNGER MIT KOMBINIERTEN MITTELN ZUM KUPPELN UND ZENTRIEREN
TRAILER WITH COMBINED TOWING AND CENTERING MEANS

(30) Priorité: 07.12.1989 FR 8916367; 27.09.1990 FR 9012086; 13.11.1990 FR 9014401
(43) Date de publication de la demande: 30.09.1992
(73) Titulaire: SARL CLIPCAR INDUSTRIE, F-53260 Villiers Charlemagne (FR)
(72) Inventeur: MORIN, André, F-53810 Change (FR); MORIN, Nicole, F-53810 Change (FR); MORIN, Patricia, F-37000 Tours (FR); MORIN, Tony, F-69500 Bron (FR); MORIN, Christophe, Mill Valley, CA 94941 (US); LOIZEAU, Nathalie, F-75011 Paris (FR)
(86) Numéro de dépôt international: FR9000883
(87) Numéro de publication internationale: WO9108940

(56) Documents cités:
- EP-A- 0 136 240
- EP-A- 0 245 570
- WO-A-86/01780
- GB-A- 2 129 750

## Description

La présente invention concerne une remorque comportant un moyen d'attelage principal mobile en hauteur, par rapport à/ou aux essieux de ladite remorque, et un moyen de centrage fixé sous la partie avant de la remorque, portant sur le toit du véhicule tracteur, définis dans le préambule de la revendication 1.

Une remorque de ce type est connue sous le N° WO-A-86 01780.

Elle a en commun avec l'invention, le fait qu'au moyen d'une tête d'attelage mobile en hauteur et solidaire de la remorque, elle est attelée à l'arrière d'un véhicule automobile par un dispositif de crochet terminé par une boule formant rotule, et le fait que la partie avant de cette remorque, appelée "capucine", déborde sur le toit dudit véhicule automobile pour y être également fixée par un point d'accrochage, afin de maintenir en ligne pendant la route la remorque et le véhicule tracteur.

Le but recherché dans ces solutions est de réaliser la synthèse entre : les avantages d'une remorque, complexe à manoeuvrer mais qui libère la voiture quand ladite remorque n'est pas utilisée, et les avantages d'un véhicule à carrosserie d'un volume équivalent à ladite remorque, tel qu'un véhicule camping-car, par exemple, très facile à manoeuvrer.

Les solutions de synthèse connues présentent l'inconvénient de rendre la remorque difficile à atteler, à l'arrière du véhicule tracteur, en même temps que difficile à fixer sur le toit dudit véhicule, surtout en raison du manque de débattement transversal et longitudinal de la tête d'attelage principal et du système de fixation réalisé, sur le toit du véhicule tracteur par l'intermédiaire d'une glissière, obligeant à ce que l'accrochage se fasse, en premier, sur le toit dudit véhicule tracteur.

La présente invention a pour but de remédier à ces inconvénients au moyen d'un attelage principal articulé solidaire de ladite remorque et s'accrochant à l'arrière du véhicule tracteur sur un crochet usuel à boule, solidaire dudit véhicule et utilisable avec toute autre remorque usuelle, suivant la réglementation routière internationale, tout en conservant des possibilités d'accouplement et désaccouplement très rapides de ladite remorque avec ledit véhicule tracteur malgré l'utilisation combinée d'un dispositif d'accrochage souple de la partie avant de ladite remorque sur le toit dudit véhicule, par un moyen de centrage transversal et vertical solidaire de ladite remorque, avec coulissement avant/arrière,et possibilité d'accrochage dudit moyen de centrage, au choix, avant ou après l'accrochage de l'attelage principal de la remorque à l'arrière dudit véhicule.

Pour atteindre ce but, la remorque est caractérisée en principal, par la revendication 1. Le moyen d'attelage principal est situé de préférence dans le plan médian vertical et longitudinal de la remorque, dont il est solidaire, et sa tête est en avant de son, ou de ses, essieux.

Le moyen d'attelage principal de ladite remorque s'accroche sur un des dispositifs usuels monté habituellement à l'arrière d'un véhicule tracteur portant une boule formant rotule. Le moyen d'attelage principal de ladite remorque, objet de l'invention, est constitué des éléments suivants :
A - Une tête t'attelage dans laquelle se loge la boule dudit véhicule tracteur, équipée d'un système à poignée autorisant l'accrochage et le décrochage, suivant, par exemple, que ladite poignée est respectivement rabattue ou relevée.
B - Un corps dans lequel peut être logé le piston solidaire de la tête d'attelage, qui entraîne le système de freinage, par inertie, des deux ou quatre roues de la remorque.
C - Un ou deux bras articulés relient ledit corps de l'attelage principal à un arbre de rotation transversal, en un ou deux éléments, positionné en arrière dudit corps et permettant à la tête d'attelage de suivre le mouvement de montée ou descente de la boule fixée au véhicule tracteur, entraîné par le passage des roues d'un ou des essieux dudit véhicule dans une position de dénivellation par rapport à l'appui au sol des roues d'un ou des deux essieux de la remorque dont le centre de gravité est approximativement placé dans l'axe transversal des essieux.
D - Un ou plusieurs ressorts à compression ou/et traction, solidaires, à l'une de leurs extrémités, au moyen de plaques supporte des corps ou bras de l'attelage principal, et de l'autre, du châssis ou de la carrosserie de la remorque, l'action facultative desdits ressorts étant destinés à supporter et amortir les débattements de montée ou descente de la tête d'attelage suivant les mouvements du véhicule tracteur par rapport à la remorque dans le cas de dénivellation de l'appui des roues au sol entre lesdits véhicule et remorque.
E - Un moyen de coulissement de l'arbre d'articulation d'un ou des bras du corps de l'attelage principal, constitué d'une ou deux lumières de forme allongée, ou, en variantes, d'une ou deux glissières à galets, ou roulements à billes, ou plaques ou patins en métal ou matériau autolubrifiant coulissent dans des rails afin de permettre le deplacement vers l'avant ou vers l'arrière, dudit arbre d'articulation de la tète d'attelage aux extrémités duquel les platines à galets, plaques ou patins, sont reliés, ce déplacement entrainant à la fois le déplacement de la tête d'attelage.
   - soit sur un plan perpendiculaire a l'axe de/ou des essieux,
   - soit en biais, plus en avant ou en arrière du côté droit ou plus en avant ou en arrière du côté gauche.

   Ce dispositif de mobilité avant/arrière, gauche/droite, autorise, avec le mouvement de montée ou descente de/ou des bras articulés du corps de l'attelage, un accrochage extrêmement facile de la tête d'attelage sur la boule fixée au véhicule tracteur, même si ladite tête ne se trouve pas tout à fait dans les plans, vertical, horizontal, longitudinal ou transversal en face de ladite boule, puisqu'il devient possible, avec le moyen de coulissement et d'articulation de l'attelage principal, de déplacer la tête d'attelage a volonté dans les différents plans cités, pour l'accrocher sur la boule, sans déplacer le véhicule tracteur ou la remorque, cette dernière étant en appui, ou pas, sur le toit dudit véhicule.
F - Un moyen de blocage de l'arbre d'articulation de l'attelage principal en position route, une fois que la remorque et le véhicule tracteur ont été réalignés dans leur plan vertical médian, par une simple traction en ligne droite dudit véhicule sur quelques mètres, par exemple une fois la remorque fixée à l'arrière et sur le toit dudit véhicule ; ce moyen de blocage peut être constitué par une vis solidaire d'une traverse du châssis, dont il est possible de faire tourner facilement la tête au moyen d'une clé à vilebrequin par exemple, vis munie d'un écrou fixé sur un dispositif solidaire de l'arbre d'articulation de l'attelage, qui, une fois serrée par l'intermédiaire d'un palonnier, bloque fermement, dans la position route, en butée arrière, perpendiculairement à l'axe longitudinal de ladite remorque, l'arbre d'articulation de l'attelage principal, tout en autorisant le mouvement de montée ou descente de la tête décrit en C.
   En variante, un blocage de coulissement dudit arbre de rotation peut être assuré par des verrous transversaux, ou verticaux, tirés par un ou plusieurs ressorts de maintien qui immobilisent le coulissement de l'arbre de rotation dans la position route de l'attelage ; le déverrouillage s'effectue par la manoeuvre d'une pédale ou d'une poignée ; les verrous sont maintenus dans la position déverrouillés par une pièce de calage, coulissante ou pivotante, entraînée par un ressort ; lorsque lesdits plaques ou patins, auxquels est relie ledit arbre d'articulation de l'attelage, viennent en butée de coulissement sur des embouts de sécurité arrière solidement fixés aux rails, ladite pièce de calage est repoussée par un patin métallique ou autolubrifiant, ou bien la platine a galets, solidaires d'une des extrémités de l'arbre de rotation de l'attelage, avec étirement dudit ressort de calage et libération automatique des verrous qui viennent alors bloquer le coulissement dudit arbre de l'attelage principal sous la traction du/ou des ressorts de maintien.
   La fixation souple sur le véhicule tracteur du moyen de centrage de la partie avant de la remorque, objet de l'invention, qui maintient celle-ci en ligne avec ledit véhicule pour faire que l'ensemble attelé puisse manoeuvrer suivant le comportement global d'un véhicule unique, est constitué des éléments suivants :
G - Une galerie spéciale, renforcée, est fixée solidement à la toiture du véhicule tracteur par l'intermédiaire de traverses reliées par des entretoises, et porte l'avant de la remorque.
H - Deux glissières de qualité, solidaires de la galerie et constituées chacune d'un élément coulissant librement, dans un profil en C, par exemple, au moyen de matériaux autolubrifiant, de galets ou de billes, sont reliées par une plaque support dans laquelle est percé un trou destiné a recevoir la tête de centrage rainurée de la remorque ; une clavette, en un ou deux éléments manoeuvrés respectivement en "rateau" ou en "pince" tout en restant solidaire de ladite plaque, va claveter la tête de centrage rainurée, fixée sous la partie avant de la remorque, et la rendre solidaire de la galerie, dans un mouvement longitudinal ou transversal.
I - Une tête de centrage solidaire d'un élément en matière élastique, communément appelé "silenbloc", est fixée à la structure renfort de la partie avant de la remorque par l'intermédiaire d'un support également solidaire du "silenbloc", ledit "silenbloc" amène une possibilité de débattements multiples d'inclinaison, et d'amortissement de ce débattement, par rapport à l'axe vertical de la tête de centrage, se produisant lors du changement de plan d'appui des roues de la remorque, ou devers, par rapport au plan d'appui des roues du véhicule tracteur ; ledit devers se produit au passage des roues sur les dénivellations du sol et au changement de positions occasionne par le jeu des suspensions indépendantes de ladite remorque et dudit véhicule tracteur ; l'extrémité libre de la tête de centrage peut avoir une forme cônique pour faciliter l'entrée dans le trou la plaque support solidaire de la galerie fixée sur le toit dudit véhicule tracteur. Les mouvements d'inclinaison gauche/droite et d'inclinaison avant/arrière par rapport au sens de marche, sont absorbés par la tête de centrage ; les mouvements de rapprochement ou d'éloignement de la remorque et du véhicule tracteur sont autorisés : entraînés au niveau de l'appui de fixation de ladite remorque sur la galerie dudit véhicule, par le mouvement de montée et descente de la remorque par rapport audit véhicule, d'une part, en raison du déplacement de la tête d'attelage de la remorque vers le haut ou vers le bas, au moyen de l'articulation des bras dudit attelage, ou bien en raison du jeu avant/arrière, du piston de freinage solidaire de la tête d'attelage, ou bien encore, par le mouvement d'avancée ou de recul provoqué, avant que la tête de l'attelage principal soit rendue solidaire de la boule d'accrochage, par une manoeuvre de la remorque ou du véhicule tracteur, une fois la tête de centrage mise en place sur la plaque support.

Les mouvements décrits dans le paragraphe précédent sont rendus possibles par le coulissement de la plaque d'appui, cette plaque d'appui, sur laquelle est clavetée la tête de centrage solidaire de la partie avant de la remorque, étant reliée aux glissières solidaires de la galerie, ladite galerie étant fixée solidement sur le toit du véhicule tracteur ; il est également possible de manoeuvrer manuellement, vers l'avant ou vers l'arrière, ladite plaque d'appui coulissante, sans déplacer la remorque ou le véhicule tracteur afin de mettre en face l'un de l'autre le trou de ladite plaque solidaire dudit véhicule et la tête de centrage de ladite remorque, en facilitant ainsi la fixation par clavetage de ladite tête de centrage. En variante, ladite tête de centrage, solidaire d'un élément en matière élastique appelé "silenbloc", est rendue solidaire de la partie avant de la remorque, par l'intermédiaire d'un support monté sur glissière, lui permettant de coulisser d'avant en arrière, en absorbant les mouvements de rapprochement ou d'éloignement de la remorque et du véhicule tracteur ; le support de la tête de centrage peut être manoeuvré manuellement par une poignée, afin de coulisser d'avant en arrière, pour mettre ladite tête de centrage en face du trou de la plaque d'appui à clavetage fixée, de manière rigide, dans ladite variante, à la galerie, sans avoir besoin de positionner ladite remorque, ou ledit véhicule tracteur, avec précision.

La remorque, objet de l'invention, peut être équipée, sur sa face arrière, d'un panneau relevable sur toute la largeur de celle-ci ; en position arrêt de la remorque, le panneau peut être maintenu relevé par la mise en place d'un minimum de deux montants amovibles en tube d'acier ou tube d'aluminium, réglable en hauteur, par exemple.

Un dispositif de pattes d'accrochage, par exemple élastiques, peut permettre d'installer en suspension sous le panneau relevé, un auvent de toile de type camping ou autre, formé de trois ou quatre côtés, montés approximativement verticalement, en venant faire étanchéité, par exemple, jusqu'au sol, et d'un élément assemblé aux autres pour former toiture sur un plan voisin du plan horizontal.

Compte tenu des avantages au dispositif d'accrochage en suspension sous le panneau arrière, décrit ci-dessus, ledit auvent de toile peut être reutilisé, une fois ledit panneau referme sur la face arrière de la remorque, au moyen d'un minimum de trois barres, fixées de manière à former un cadre avec lesdites barres rendues facilement décrochables, d'une part au niveau de l'articulation et de chaque côté de la face arrière de la remorque, entre les côtes de ladite face, et les extrémités supérieures des deux montants prévus initialement pour maintenir le panneau arrière relevé, et, d'autre part, en guise de traverse, entre les deux extrémités supérieures desdits montants ; la fixation en suspension des pattes d'accrochage des différents côtés de toile d'auvent, sous lesdites barres, peut utiliser des moyens comparables à leur fixation sous le panneau arrière relevable ; des points de fixation en partie extérieure supérieure dudit panneau rabattu peuvent être installés sous la ligne d'articulation pour remplacer les points de fixation utilisés à l'intérieur dudit panneau, quand ce dernier est en position relevée.

Lorsque la remorque est désolidarisée du véhicule tracteur et que ce dernier est éloigné de quelques mètres, il est également possible d'utiliser le dessous de la partie avant ou "capucine", de ladite remorque, pour y installer un auvent de toile à plusieurs côtés, relevables ou non, ladite remorque étant stabilisée au sol par des pieds rabattables.

Une fois ladite remorque dételée, le véhicule tracteur peut conserver à volonté son crochet d'attelage muni de sa boule pour tracter n'importe quelle autre remorque usuelle ; la galerie peut être maintenue fixée au toit dudit véhicule et utilisée de manière usuelle pour porter des marchandises, ou planche à voile, par exemple ; elle peut aussi, après avoir été montée facilement sur le toit d'un véhicule à gouttière ou sans gouttière, être démontée tout aussi facilement sans laisser de traces de fixation apparentes.

Les dessins annexes illustrent l'invention par une représentation, sur deux planches d'exemples de réalisations, non limitatifs :

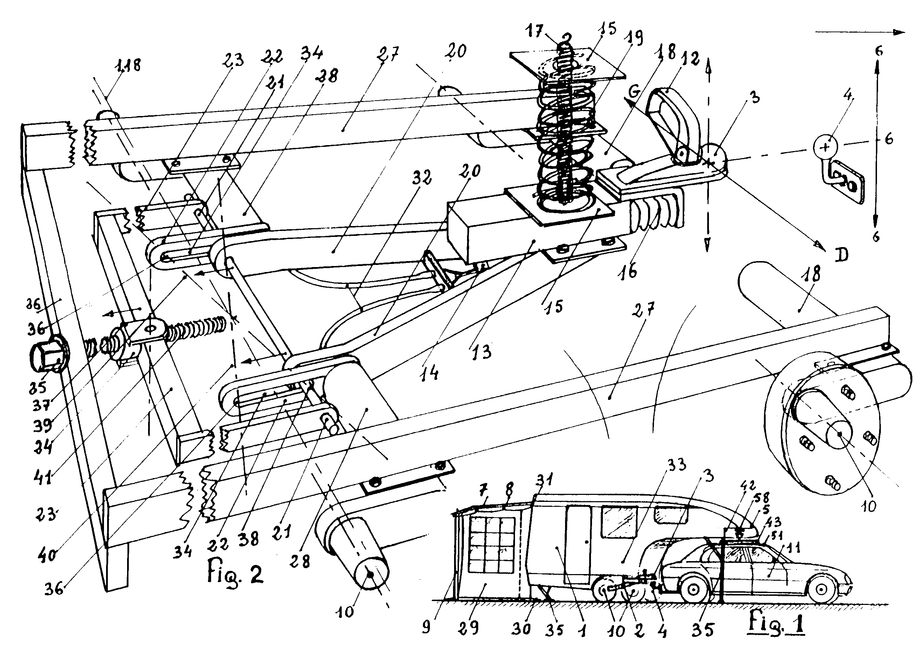

- La figure 1 représente une vue générale de l'invention et situe l'attelage principal de la remorque, sa fixation de centrage sur le toit du véhicule tracteur, son panneau arrière relevé et la toile d'auvent accrochée.
- La figure 2 représente une vue détaillée de l'attelage principal articulé de la remorque.
- La figure 3 représente une vue détailée de la fixation de centrage de l'avant de la remorque sur le toit du véhicule tracteur.
- La figure 4 représente le clavetage "en pince" de la tête de centrage.
- La figure 5 représente la tête de centrage.
- Les figures 6 et 7 représentent deux vues en coupe de la tête de centrage et ses possibilités de clavetage sur a plaque d'appui coulissante, ou sous cette plaque.
- Les figures 8, 9 et 10 représentent les variantes de positionnement de la tête de centrage,de son support, de la plaque de centrage solidaire de la galerie et de sa fixation sur le toit du véhicule tracteur.
- La figure 11 représente des variantes de coulissement et de verrouillage de l'attelage principal.

Sur la remorque (1), suivant la PLANCHE 1, l'attelage principal (2) est placé approximativement de telle manière que la tête d'attelage (3) se situe légèrement en avant de/ou des essieux (10) de la remorque (1), par rapport au sens de la marche.

La tête d'attelage (3) de a remorque (1) s'encastre sur le crochet muni d'une boule (4) solidaire du véhicule tracteur (11).

La tête de centrage (58), fixée sur la structure renfort 42) solidaire de l'avant de la remorque (1), vient se fixer par clavetage sur un dispositif coulissant solidaire d'une galerie spéciale (43) fixée solidement sur le toit du véhicule tracteur (11).

Le panneau arrière (7) de la remorque (1) est relevable et maintenu en position relevée par au moins deux poteaux (9) qui peuvent être réglables en hauteur, le panneau est articule en sa partie supérieure (31) .

Un auvent en toile (29), constitué de trois ou quatre cotes assurant l'étanchéité au sol (30) avec un élément toile en toiture, est suspendu par des attaches (8) au panneau relevé (7).

Le panneau (7) peut rester fermé à l'arrière de la remorque (1) et être remplacé par une structure d'au moins trois barres et un moyen de fixation transversal au niveau de l'articulation (31) du panneau (7), pour y suspendre le même auvent de toile (29).

Le châssis (27) de la remorque (1) est équipé de un ou deux essieux (10) dont le corps d'essieu peut être coupé en deux éléments (18) ou non ; dans le cas d'un deuxième essieu, les éléments (28) du corps d'essieu peuvent servir de support à l'attelage principal (2) ; dans le cas où un seul essieu équipe le châssis (27) de la remorque (1), une entretoise support remplace le corps d'essieu (28).

L'attelage principal (2) de la remorque (1) est constitué d'une tête d'attelage (3) munie d'un système à poignée (12) autorisant le décrochage ou l'accrochage sur la boule (4) dont est équipé le crochet de remorquage solidarisé, au moyen de renforts du commerce, avec le véhicule tracteur (11).

La tête d'attelage (3) est solidaire d'un piston (16) protégé d'une gaine caoutchoutée, lequel piston (16), retenu par un ressort ou un moyen hydraulique, s'enfonce dans un corps (13) sous la poussée entraînée, par inertie, lorsque le véhicule tracteur (11) est freiné, ledit piston (16) manoeuvrant sous cette poussée un levier (14) qui tire sur les câbles (32) actionnant le freinage des roues d'essieu (10).

Le corps (13) de l'attelage principal (2) est solidaire de deux bras (20) reliant ledit corps (13) à un arbre (21) qui permet l'articulation de l'attelage (2) ; l'articulation dudit attelage (2) autour de l'arbre (21) autorise un mouvement de montée ou descente de la tête d'attelage (3), soit pour suivre le mouvement de haut en bas effectué par le débattement de la suspension du véhicule tracteur (11), ou le débattement de la remorque (1) dans le passage de dénivellations, ou suivant l'effet de la charge ; cette mobilité de la tête d'attelage (3) évite le risque que le véhicule tracteur (11) soulève intempestivement la remorque (1) ou, inversement, que la remorque (1) soulève dangereusement le véhicule tracteur (11) en passant sur un dos d'âne ou un trottoir, par exemple, en faisant perdre adhérence au sol audit véhicule (11).

Des ressorts de traction (17) ou/et de compression (19) peuvent être fixés facultativement sur/ ou sous les plaques (15) solidaires, l'une du corps (13) de l'attelage principal (2), l'autre, du châssis (27) ou de la carrosserie (33) de la remorque (1), ce dispositif de ressorts (17/19) supportant et amortissant les débattements de montée ou descente de la tête d'attelage (3), accrochée ou non à la boule (4) du véhicule (11).

L'arbre d'articulation (21) de l'attelage principal (2) est monté dans deux glissières (22), solidaires des entretoises ou des éléments (28) d'un corps d'essieu, eux-mêmes solidaires du châssis, lesdites glissières (22) étant, par exemple, constituée de deux pièces métalliques munies de trous ou lumières (34) de forme allongée, positionnes près des extrêmités de l'arbre (21).

Ces lumières (34) permettent le coulissement libre de l'arbre d'articulation (21) vers l'arrière ou vers l'avant, soit de manière parallèle à une ligne perpendiculaire (118) au plan vertical médian (6) des longerons du châssis (27) et paralléle à l'axe des roues (10), ou bien suivant une ligne non perpendiculaire audit plan médian (6) ; un coulissement non perpendiculaire au plan médian (6), c'est-à-dire un déplacement, par exemple, de l'arbre (21) vers l'arrière, seulement à gauche, entraîne la mise en position de bas (39) dudit arbre (21), par rapport à ladite perpendiculaire (118) et le deplacement de la tête d'attelage (3) vers la gauche dans la direction G, ou bien en déplacant, par exemple, l'arbre (21) en arrière, seulement à droite, la mise en position de bas (40) dudit arbre par rapport à ladite perpendiculaire (118) et le déplacement de la tête d'attelage (3) vers la droite dans la direction D.

L'arbre (21) : moyen d'articulation de l'attelage principal (2), ou les lumières (22) : moyen de coulissement dudit attelage (2), amènent une mobilité de la tête d'attelage (3) vers le haut, vers le bas, vers l'avant, vers l'arrière, vers la droite et vers la gauche, qui rend facile l'accrochage de ladite tête (3) sur la boule (4) du crochet d'attelage du véhicule tracteur (11), que la remorque (1) soit en appui sur la galerie (43) dudit véhicule (11), ou bien en appui sur des pieds avant ou arrière (35) de stabilisation, solidaire d'une articulation fixée dessous la carrosserie (33), une fois lesdits pieds (35) rabattus au sol (30).

Un moyen de blocage (37) par serrage, par exemple, contre un élément du châssis (26) blocage desserré et détendu au moment de la mise en place de la tête d'attelage (3) de la remorque (1) sur la boule (4), permet de positionner perpendiculairement au plan médian (6), longitudinal du châssis (27) de ladite remorque (1), en butée arrière (36) des deux glissières (22), l'arbre d'articulation (21) de la tête d'attelage (2), au moyen, par exemple, d'un écrou (24) fixé par une articulation à un dispositif (23) genre palonnier solidaire dudit arbre (21) et d'une vis (41) dont la tête (25) en applique contre la traverse (26), est tournée avec une clef vilbrequin (73).

Dans cette dernière position, qui est la position route indispensable de l'attelage (2) pour la circulation, seul, le mouvement de montée et descente de la tête d'attelage (3), est assuré, tandis que la remorque (1) et le véhicule tracteur (11) sont rapprochés l'un de l'autre dans le sens de la marche, au maximum, pour faciliter la maniabilité, l'ensemble se conduisant comme un véhicule unique.

Pour faciliter la mise en place, pour la route, de l'attelage principal (2) avec la mise en position de l'arbre d'articulation (21) sur les deux butées arrières (36) des glissières (22), lorsque la tête d'attelage (2) de la remorque (1) est accrochée sur la boule (4) du véhicule (11), avant de manoeuvrer le moyen de blocage (37) en position route, et une fois que la tête de centrage (58) est solidarisée à la galerie (43) du véhicule (11), il est possible de faire avancer en ligne droite de quelques mètres, le véhicule tracteur (11) ; l'arbre d'articulation (21) vient alors, progressivement en butée avant (38) des deux glissières (22), dans la position perpendiculaire au plan vertical médian (6) du chassis (27), les plans verticaux médians (6) longitudinaux de la remorque (1) et du véhicule (11) étant en prolongement l'un de l'autre, une légère action de freinage du véhicule (11) faisant avancer par inertie la remorque (1) et reculer l'arbre d'articulation (21) de l'attelage principal (2) vers les butées arrières (36) des glissières (22) ; il ne reste plus alors qu'a tourner la tête de vis (25) pour bloquer le dispositif (23) contre l'élément de châssis (26), l'arbre d'articulation (21) venant fermement en butée arrière (36) de ses deux glissières (34) en position route convenable.

Sur le véhicule tracteur (11), dont on peut situer l'avant (5) sur les PLANCHES 1 et 2, est fixée une galerie spéciale (43) constituée de traverses (44) métalliques, tubulaires, par exemple, reliées par des entretoises (45), perpendiculairement auxdites traverses (44).

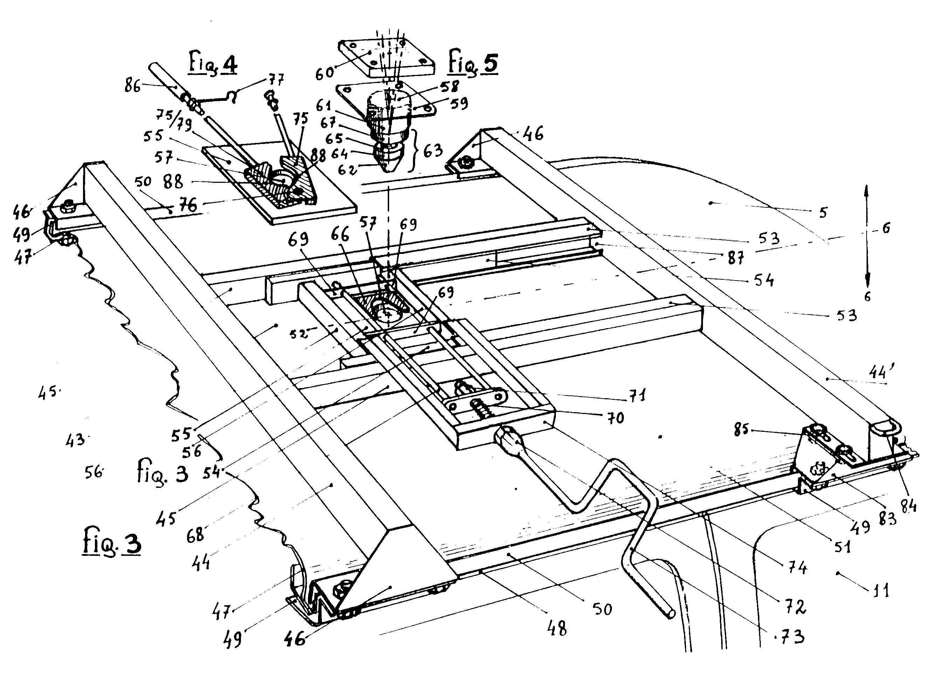

La galerie spéciale (43) est rendue solidaire du véhicule tracteur (11) par un dispositif de pattes métalliques (46) maintenues solidement aux rives (47) du toit (51) du véhicule tracteur (11) par boulonnage dans l'entrée de porte (48), ou, comme le montre la figure 3, par boulonnage d'une contre patte (49), venant en appui sous la gouttière (50) ; les pattes (46) sont soudées aux traverses (44) ou boulonnées en variante (83), avec trous oblongs (85) de réglage sur la traverse (44), munie également d'anneaux (84) destinés à la fixation d'une sangle.

Sur les entretoises (45), positionnées face a face de chaque côté de l'axe longitudinal (52) de la galerie (43), approximativement situé dans le plan médian (6), sont fixées deux glissières (53) constituées chacune - suivant la fig. 3 - d'un élément (54) coulissant dans un profil (87) en forme de C, au moyen de l'utilisation de matériaux autolubrifiants, de galets ou de billes.

Les éléments coulissants (54) sont reliés entre eux par une plaque d'appui (55) munie de renforts (56) ; cette plaque (55) est percée d'un trou (57) de forme arrondie dans lequel vient se loger le corps cylindrique de la tête de centrage (58).

La tête de centrage (58) est fixée sur a structure renfort (42), solidaire de l'avant (5) de la remorque (1), comme présenté sur la PLANCHE 1, au moyen d'une embase (59) boulonnée sur la structure (42), avec ou sans, intermédiaire d'une ou plusieurs cales (60) permettant un réglage en hauteur, comme présenté sur la PLANCHE 2 et la PLANCHE 3.

La tête de centrage (58) est constituée de deux éléments :
* L'élément destine a absorber les débattements de devers entre la remorque (1) et le véhicule tracteur (11), une fois ceux-ci solidarisés entre eux : le "silenbloc" (61) élément en matière élastique armée solidarisé à l'embase (59) boulonnée sur la structure (42).
* L'élément destiné à centrer et fixer l'avant (5) de la remorque (1) à la galerie (43) du véhicule tracteur (11) : le corps (63) de la tête de centrage (58) de forme cylindrique, également solidarisé au "silenbloc" (61) et constitue de plusieurs zones :

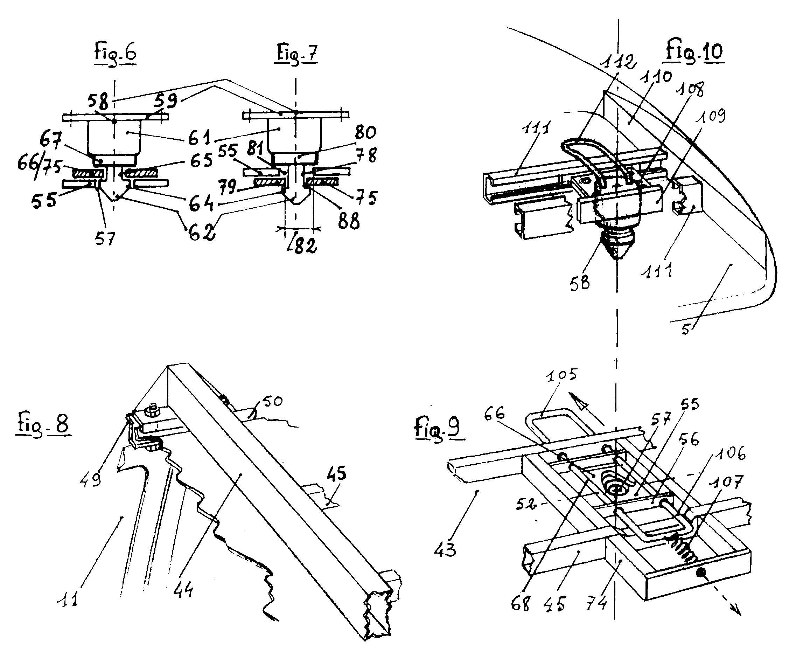

- une zone d'extrémité (62) libre du corps (63), de préférence cônique pour faciliter la pénétration dans le trou (57) de la base (64), dont le diamètre est juste inférieur à celui du trou (57) de la plaque d'appui (55), solidaire des éléments coulissants (54) de la galerie (43).
- une zone rainurée (65), destinée à recevoir la clavette (66), solidarisant la tête de centrage (58) avec la plaque (55) : Fig. 6.
- une zone d'appui (67) de la partie avant (5) remorque (1) sur la galerie (43) du véhicule (11), par l'intermédiaire de la tête de centrage (58), la clavette (66), la plaque (55), et les glissières (53).

Comme le représente la Fig. 3, la clavette (66), en forme de fer à cheval ouvert, peut coulisser transversalement à l'axe (52) de la galerie (43), au moyen d'un chariot (68), sur lequel elle est fixée, qui traverse des guides (69), et qui peut être manoeuvrée par un dispositif de vis (70), serrant ou desserrant l'écrou (71), solidaire du chairot (68) ; la tête (72) de la vis (70), solidaire d'un pontet (74), fixé sur les renforts (56) de la plaque (55), tourne au moyen de la clef vilebrequin (73) servant aussi à bloquer, en position route, l'écrou (25) du dispositif de blocage (2) de l'arbre (21) d'articulation de l'attelage principal (2).

Un autre dispositif de clavetage réalise "en pince" plutôt qu'en "fer à cheval ouvert", est représenté : Fig. 4 : La plaque (55) est percée du trou (57), dans lequel se loge la tête d'attelage (58) des Fig. 5 et 6 ; les deux éléments de clavette (75) solidarisés à la plaque par un axe d'articulation (76) peuvent se refermer dans la rainure (65) du corps (63) de la tête d'attelage (58) pour solidariser celle-ci (58) à la galerie (43) et être maintenues dans cette position par un dispositif mécanique qui peut être, par exemple, un crochet (77) ; dans une variante de montage un des éléments de clavette en pince peut être fixé de manière rigide (79) à la plaque (55) ; une poignée (86) peut servir par exemple de commande manuelle, solidaire ou non, de la clavette rigide (79) pour déplacer la plaque (55) vers l'avant (5) du véhicule tracteur (11) ou vers l'arrière, et mettre ainsi en place, au besoin, le trou (57) de logement de la tête de centrage (58), facilement en face de ladite tête de centrage (58).

Les dispositifs de clavetage de la Fig. 3 et de la Fig. 4, respectivement en "fer a cheval ouvert" (66) ou "en pince" (75), peuvent être installés dessus la plaque (55), comme le montrent les Fig. 3 et 4, ou bien dessous la plaque (55), comme le montre la Fig. 7.

Le diamètre du trou (57) Fig. 6, est juste supérieur au diamètre de la base (64) de la zone conique (62) ; la rainure (65) du corps de la tête de centrage (58) est juste supérieure en hauteur, à l'épaisseur des éléments de clavette (66 ou 75), et la zone d'appui (67) du corps (63), dont le diamètre est plus large que le trou (57), vient s'appuyer sur les éléments de clavette (66 ou 75), en appui sur la plaque (55).

Le diamètre du trou (81), Fig. 7, est largement supérieur au diamètre de la base (64) de la zone cônique (62), mais inférieur au diamètre de la zone d'appui (80) dans la variante représentée, ou l'un des éléments de clavette en pince est fixe, le diamètre de passage (82) de la base (64) de la zone cônique (62) intègre le rebord de l'encoche (88) de l'élément de clavette fixe (79), le trou (81) de la plaque (55) étant agrandi par rapport au trou (57) représenté sur la Fig. 6 ; l'élément de clavette mobile (75) vient se refermer dans la rainure (78) du corps (63) de la tête de centrage (58), et pousse légèrement ladite tête (58) de manière à ce que ladite rainure (78) vienne s enclencher aussi sur le rebord de la clavette fixe (79) ; la rainure (78) est juste supérieure en hauteur a l'épaisseur cumulée de la plaque (55) et des éléments de clavette (79 - 75) ; la zone d'appui (80), dont le diamètre est plus large que le trou (81), vient s'appuyer sur la plaque (55).

Selon les figures 8 et 9, la plaque (55) munie de renforts (56) et percée d'un trou (57) dans lequel vient se loger la tête de centrage (58) est solidement fixée sur les entretoises (45) liées aux traverses (44) de la galerie sépciale (43) solidarisée avec le véhicule tracteur (11) par boulonnage de contre-pattes (49) dans les gouttières (50) ; une clavette (66) coulisse transversalement à l'axe (52) de la galerie, au moyen d'un chariot (68) traversant des guides (69) qui se termine, dans ses extrémités transversales par rapport a l'axe (52) de la galerie, d'un côte, par une poignée (105), de l'autre, par une prise (106) de ressort de traction (107) solidaire également d'un pontet (74) fixé a l'une des entretoises (45) de la galerie (43) ; une traction sur la poignée (105) déplace la clavette (66) et libère la tête de centrage (58) fixée a la partie avant (5) de la remorque (1) et inversement, en lâchant la poignée (105) une fois la tête de centrage (58) remise en place, l'effort de traction du ressort (107) remet en place la clavette (66) de blocage ; l'axe (52) de la galerie correspond à l'axe du trou (57).

Selon la figure 10, la tête de centrage (58) est rendue solidaire de la structure (110) de la partie avant (5) de la remorque (1) par l'intermédiaire d'un support (108) monté sur des patins en matériau autolubrifiant (109) loges dans des glissières (111), en forme de C, afin de coulisser et permettre ainsi une grande facilité de déplacement, vers avant ou l'arrière, de la tête de centrage (58), déplacement qui pourrait également s'obtenir a l'aide d'un système a bille, ou galets ; une poignée (112), solidaire du support (108), permet de déplacer facilement la tête de centrage (58) dans ses glissières (111) et mettre ainsi l'un en face de l'autre ladite tête (58) et le trou (57/81) de la plaque (55) a clavette (66) de la galerie (43), sans positionner avec précision ladite remorque (1) et ledit véhicule tracteur (11), l'un par rapport à l'autre, ceci par un simple mouvement manuel.

La poignée (112) peut servir également pour déplacer transversalement l'avant ( 5) de la remorque (1), en faisant effectuer a celle-ci (1) un léger pivotement sur ses roues (10), afin de mettre facilement en ligne la tête de centrage (58) et l'axe (52) de la galerie (43) correspondant également a l'axe du trou (57/81) de la plaque d'appui (55).

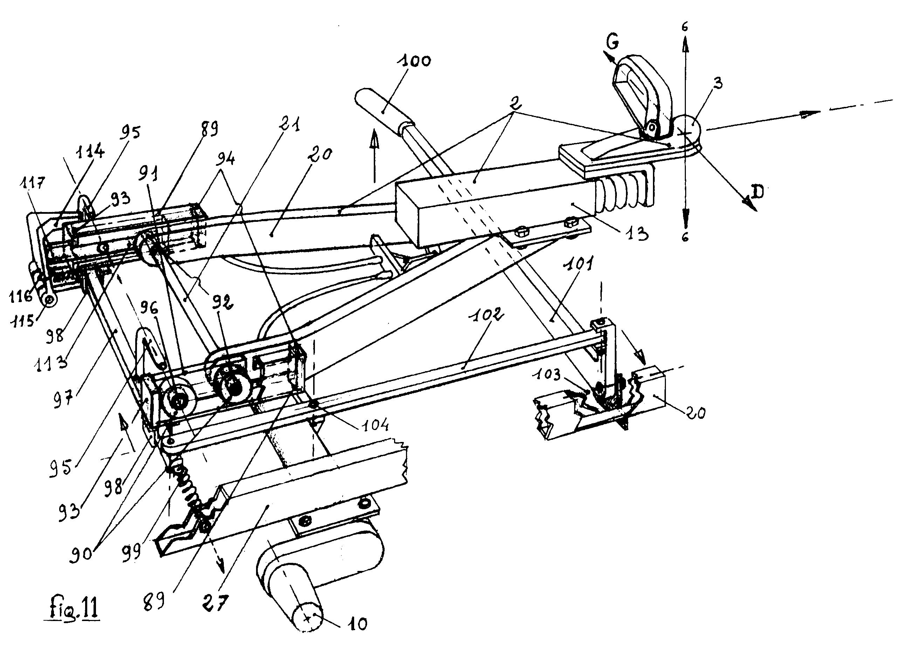

Suivant a Figure 11, PLANCHE 4, le moyen de coulissement de l'arbre (21) d'articulation vers le haut et vers le bas de l'attelage principal (2), est représenté, en variantes, par deux rails en C (89) solidarisés au chassis (27), l'un en exemple à droite du plan médian (6) dans lequel coulissent des galets (90) fixés par deux sur une platine (91), l'autre, en exemple a gauche, dans lequel coulisse un patin (113), l'arbre de rotation (21) solidaire des bras (20) étant également rendu solidaire de la platine (91), exemple droit, ou du patin (113), exemple gauche, en traversant les bras (20) la platine (91) et les galets (90) ou le patin (113), aux extrémités (92).

L'attelage principal (2), représenté remorque (1) et véhicule tracteur (11) en ligne dans le plan médian (6), les platines (91) et patins (113) venant en butée sur les embouts de sécurité arrière (93) solidement fixes aux rails (89), est maintenu dans la position route par des verrous (95) qui traversent, à la fois, dans l'exemple droit présenté, les platines (91), les rails (89), et traversent, également, le galet arrière (96) ; dans l'exemple gauche présenté, ils traversent les patins (113) ; dans les deux exemples présentés le blocage du mouvement de coulissement vers l'avant de l'attelage principal (2) est efficace, ledit attelage (2) ne pouvant, en aucun cas, quitter les rails (89) auxquels il est solidarisé grâce à la mise en place d'embouts de sécurité supplémentaires avant (94).

Les verrous (95) relies entre eux par une tringle (97) coulissant dans des chapes (98) solidaire des rails (89) et du châssis (20), sont tirés fortement et maintenus en position blocage par un ressort de traction (99) fixé d'un côté aux verrous (95), et de l'autre, au châssis (20).

Le déverrouillage de l'attelage principal (2) s'effectue manuellement par le relevage d'une poignée (100) agissant sur des leviers (101/102), articulés sur des axes (103/104) relies au châssis (20), dont l'action entraîne le retrait des verrous (95) de leur position de blocage de l'attelage (2) pour la route ; le système de manoeuvre et d'articulation des leviers (101/102) peut être inversé, pour remplacer le relevage d'une poignée (100) par l'abaissement d'une pédale entraînant, en fin de course, le déverrouillage du coulissement de l'attelage (2). Dès que le coulissement de l'attelage (2) est déverrouillé manuellement, et que la platine (91) ou le patin (113) avance légèrement, la poignée (100) peut être lâchée, une pièce de calage (114) se déplacant en même temps, par pivotement sur l'axe (115) sous la traction d'un ressort (116) pour empêcher les verrous (95) de traverser les rails (89), et pour autoriser le coulissement, dans l'exemple droit comme dans l'exemple gauche, de l'attelage principal (2) afin de faciliter le décrochage ou l'accrochage de la tête d'attelage (3) sur la boule (4) du véhicule tracteur (11).

Le verrouillage de l'attelage principal (2) s'effectue, automatiquement par la suite, lorsque, par coulissement de l'attelage (2) vers l'arrière, la platine (91) ou le patin (113) vient en butée sur l'embout de sécurité arrière (93) et vient en même temps en appui, par une extrémité (117) sur la pièce de calage (114) en étirant le ressort (116) de calage de ladite pièce (114) qui se déplace et provoque le déplacement transversal des verrous (95) dans la position de blocage pour la route de l'attelage (2) sous l'effet du ressort (99) de maintien desdits verrous (95) en position.

## Revendications

1. Remorque (1) comportant un moyen d'attelage principal (2) combiné avec un dispositif de fixation souple de la partie avant (5) de ladite remorque (1) sur le toit (51) du véhicule tracteur (11) par un moyen de centrage (58) transversal et vertical, coulissant d'avant en arrière sur des glissières (53/111), remorque (1) caractérisée en ce que :
- l'attelage principal (2), solidaire de la remorque (1) constitué de un ou deux bras (20) articulés d'un côté sur un arbre de rotation (21) et relié de l'autre au corps (13) solidaire de la tête d'attelage (3) est rendu mobile de bas en haut,
- le moyen de coulissement de l'arbre (21) de l'attelage principal (2), agissant vers l'avant ou vers l'arrière, déplace la tête d'attelage (3) sur le plan vertical et longitudinal médian (6) de la remorque (1) ou bien plus à gauche ou plus à droite du plan vertical médian (6), ledit arbre (21) se plaçant respectivement en bials (39 et 40) par rapport à la perpendiculaire dudit plan (6), facilitant ainsi l'accrochage de ladite tête (3) à la boule (4) du véhicule tracteur (11) au moment de l'attelage,
- le moyen de blocage de l'arbre d'articulation (21) de l'attelage principal (2) est un dispositif solidaire du châssis (27) qui peut être une vis (41) au un verrou (95) qui maintient efficacement ledit arbre (21) en position lorsque la remarque (1) est accouplée audit véhicule (11) pour la route,
- le moyen de centrage comporte une tête de centrage (58) solidaire de l'avant (5) de la remarque (1) qui vient se claveter pour la route sur une plaque d'appui (55) percée d'un trou (57/81) solidaire d'une galerie (43) fixée sur le tait (51) du véhicule tracteur (11), ledit moyen de centrage étant complété d'un moyen de coulissement constitué de glissières (53/111) solidaires, soit de la plaque d'appui (55), soit de la tête de centrage (58), autorisant par rapport audit véhicule tracteur (11), les mouvements vers l'avant ou vers l'arrière de ladite remarque (1) entraînés par le débattement de leurs suspensions respectives ou entraînés par le mouvement de la remorque (1) sous l'effet du piston (16) de freinage à inertie, ou bien le déplacement manuel sur les glissières (53/111) de la plaque (55) ou de le tête de centrage (58), avant l'appui de ladite remorque (1) sur la galerie (43) dudit véhicule (11).

2. Remorque (1) selon la revendication 1, caractérisée en ce que le corps (63) de la tête de centrage (58), de forme cylindrique, comporte plusieurs zones :
- une zone cônique (62) à l'extrémité libre du corps (63), facilitant la pénétration, dans le trou (57/81) de la plaque d'appui (55), solidaire de la galerie (43), de la base (64) du cône (62), dont le diamètre est juste inférieur à celui du trou (57/81) ;
- une zone rainurée (65/78), destinée à recevoir la/ou les clavettes (66/75/79), solidarisant la tête de centrage (58), fixés à l'avant de la remorque (5) sur la plaque d'appui (55) solidaire de la galerie (43) du véhicule tracteur (11), la hauteur de la rainure (65) étant juste supérieure à l'épaisseur de clavettes (66/75/79) montées dessus la plaque (55), avec, en plus, l'épaisseur de ladite plaque (55), pour le cas de clavettes (66/75/79) montées dessous la plaque (55), dans la rainure (78).
- une zone d'appui (67) du corps (63) de la tête de centrage (58) dont le diamètre est supérieur à l'encochage (88) de la/ou des clavettes (66/75/79) et au trou (57/81) de la plaque (55) support de l'avant (5) de la remorque (1).
- une zone en matière élastique (61), solidaire, sur l'une de ses faces, du corps (63) de la tête d'attelage (3), et solidaire, sur son autre face, d'une embase (59) boulonnée sour l'avant (5) de la remarque (1), par l'intermédiaire de cales (60) permettant un réglage en hauteur, l'ensemble autorisant des mouvements d'inclinaisons dans les directions longitudinales avant/arrière et transversales gauche/droite, de ladite remorque (1), par rapport au véhicule tracteur (11), sans fatigue des carrosseries respectives, même en position de fort devers entre elles.

3. Remorque (1) selon les revendications 1 et 2, caractérisée en ce que le moyen de clavetage du corps (63), solidarisant la tête d'attelage (58) avec la plaque (55) de la galerie (43), est constitué de deux clavettes en pînce (75 et 79), une des clavettes (79) étant fixe, et l'autre (75), articulée sur un axe (76) solidaire de la plaque (55), autour duquel elle tourne pour se refermer dans une rainure (78 ou 65), plus haute ou moins haute suivant que lesdites clavettes sont positionnées respectivement dessous ou dessus la plaque (55), le diamètre du trou (57), dans lequel s'enfonce l'extrémité cônique (62) de la tête de centrage (58), ou le passage (82), à la fois dans le trou (81) de la plaque (55), et dans l'encoche (88) de la clavette dans le cas de clavette fixe (79), étant juste supérieur au diamètre de a base (64) du cône (62), les trous (57 ou 81) perces dans la plaque (55) étant eux-mêmes, dans tous les cas, de diamètre inférieur aux diamètres des différentes zones d'appui (67 ou 80) du corps (63) de la tête de centrage (58) ; les clavettes (75) sont maintenues en position tête de centrage (58) clavetée dans la rainure (65/78) par un moyen mécanique, exemple : un crochet (77) reliant lesdites clavettes dans la position route.

4. Remorque (1) selon les revendications 1 à 3, caractérisées en ce que le moyen d'appui de sa partie avant (5) est une galerie (43) spéciale, constituée de traverses (44) rendues solidaires du toit (51) du véhicule tracteur (11), perpendiculairement à son axe (52) longitudinal, par boulonnage de pattes métalliques (46 ou 83) dans l'entrée des portes (48) ou boulonnage de contre pattes (49) sous les gouttières (50), et dont la plaque d'appui (55) percée du trou (57/81) de logement de la tête de centrage (58) de la remorque (1) est fixée sur des glissières (53) solidaires d'entretoises (45) fixées perpendiculairement aux traverses (44), le clavetage de la tête de centrage (58) sur la plaque (55) se faisant par l'intermédiaire, soit d'une clavette (66) en fer a cheval ouvert coulissant transversalement à l'axe longitudinal (52) de la galerie, au moyen d'un chariot (68) traversant des guides (69), déplacé par une vis (70) solidaire d'un pontet (74) fixe aux renforts (56) de la plaque (55), soit d'un dispositif en deux éléments de clavette (75/79) en pince solidarisés dessus (Fig. 6) ou dessous (Fig. 7) la plaque d'appui (55) par un axe d'articulation (76), et se refermant dans la rainure (65/78) du corps (63) de la tête de centrage (58), les éléments (75/79) de clavette étant bloques en position route par un dispositif mécanique qui peut être un crochet (77) ; les glissières (53) solidaires de la galerie (43) sont constituées d'un élément (54) coulissant librement dans un profil (87) en forme de C, au moyen de l'utilisation de matériaux autolubrifiants, de galets ou de billes ; une poignée (86) solidaire de la plaque (55), par l'intermédiaire, par exemple, de la clavette fixe (79), sert de commande manuelle de coulissement de la plaque (55) pour positionner le trou (57/81) perce dans ladite plaque (55), en face de l'extrémité conique (62) de la tête de centrage (58), rendant ainsi facile, d'une part le logement de ladite tête (58) dans le trou (57/81) de la plaque (55), et, d'autre part, au choix,rendant ans facile la fixation souple de la tête de centrage (58) de la partie avant (5) de la remorque (1) sur le toit (51) du véhicule tracteur (11), avant ou après l'accrochage de la tête (3) de l'attelage principal (2) de ladite remorque (1) sur la boule (4) du crochet arrière dudit véhicule (11) ; la galerie (43) est solidarisée au toit (51) du véhicule tracteur (11) par le moyen de pattes (46) fixées par soudure ou en variante de pattes (83) fixées par boulonnage dans des trous oblongs (85) percés dans le rebord de la traverse (44), afin de permettre un réglage en largeur par rapport au toit (51) ; ladite traverse (44) est également munie d'anneaux (84) permettant la fixation de sangles destinées à maintenir des marchandises ou, par exemple, une planche a voile lorsque le véhicule (11) circule sans que la remorque (1) lui soit accouplée.

5. Remorque (1) selon la revendication 1, caractérisée en ce que l'attelage principal (2) est articule de haut en bas par l'intermédiaire de un ou deux bras (20) reliant le corps (13) et la tête d'attelage (3) à un arbre de rotation (21) coulissant librement, soit vers l'avant, soit vers l'arrière, parallèlement à une ligne perpendiculaire au plan médian vertical (6) du châssis (27), soit en biais par rapport à ladite ligne et plus en arrière à gauche (ligne 39), ou plus en arrière à droite (ligne 40), ce coulissement libre de l'arbre (21) autorisant le deplacement avant/arrière ou gauche/droite de la tête d'attelage (3) étant rendu possible par le moyen de deux pièces métalliques munies de trous ou lumières (34) de forme allongée, positionnées aux extrémités de l'arbre (21) et rendues solidaires des longerons du châssis (27), par l'intermédiaire d'un corps d'essieu (28) ou d'une ou deux entretoises (28).

6. Remorque (1) selon la revendication 1 caractérisée en ce que le moyen de coulissement de l'arbre (21) d'articulation vers le haut et vers le bas des bras (20) de l'attelage principal (2) vers l'avant ou vers l'arrière, est réalisé par deux rails longitudinaux (89) de préférence en forme de C, dans lesquels coulissent des patins (113) ou des galets (90) fixes deux par deux à des platines (91), lesdits patins (113) ou platines (91) étant rendus solidaires de l'arbre de rotation (21).

7. Remorque (1) selon les revendications 1 et 6, caractérisée en ce que le moyen de blocage du coulissement de l'arbre (21) d'articulation de l'attelage principal (2) dans la position route, en butée arrière de coulissement, est réalisé par des verrous (95) maintenus en place par un ressort (99), le déverrouillage s'effectuant par la manoeuvre d'une poignée (100) ou dune pédale mettant en oeuvre, par le jeu de leviers (101/102) et/ou bielettes, le retrait des verrous (95).

8. Remorque (1) selon les revendications 1, 6 et 7, caractérisée en ce qu'après le déverrouillage du coulissement de l'attelage principal (2), une fois la poignée (100) lâchée après une légère avancée de la platine (91) ou du patin (113), une pièce de calage (114) se déplace par pivotement ou coulissement sous l'effet d'un ressort (116) et empêche les verrous (95) de traverser les rails (89), ce qui autorise le coulissement, à droite comme à gauche, de l'attelage principal (2) afin de faciliter le décrochage ou l'accrochage de la tête d'attelage (3) sur la boule (4) du véhicule tracteur (11) le verrouillage de l'attelage principal (2) s'effectuant automatiquement lorsque, par coulissement de l'attelage (2) vers l'arrière, a platine (91) ou le patin (113) vient en butée par son extrémité (117) sur l'embout de sécurité arrière (93) et vient en même temps en appui sur la pièce de calage (114) en étirant le ressort (116) de calage de ladite pièce (114) qui se déplace alors et provoque le deplacement transversal automatique des verrous (95) dans la position de blocage route de l'attelage (2) sous l'effet du ressort (99) de maintien desdits verrous (95).

9. Remorque (1) selon la revendication 1, caractérisée en ce que le moyen de coulissement de la tête de centrage (58) fixée à la partie avant (5) de la remorque (1) n'est pas solidaire de la galerie (43) du véhicule tracteur (11), mais est fixée sur un support (108) monté sur des patins (109) en matériau autolubrifiant, ou bien équipés de billes ou galets, et coulisse dans des glissières (111) solidarisées à la structure (110) de l'avant (5) de la remorque (1),une poignée (112) permettant de déplacer facilement la tête de centrage (58) sur des glissières (111) pour mettre l'un en face de l'autre ladite tête de centrage (58) et le trou (57/81) de la plaque d'appui (55) à clavette (66) fixée à la galerie (43) du véhicule tracteur (11), ou de déplacer transversalement l'avant (5) de ladite remorque (1) pour mettre en ligne la tête de centrage (58) avec l'axe (52) du trou (57/81); le moyen d'appui de la partie avant (5) de la remorque (1) sur le véhicule tracteur (11) est une galerie (43) spéciale dont la plaque d'appui (55),percée du trou (57/81) de logement de la tête de centrage (58) qui lui est solidarisée, est fixée de manière rigide aux entretoises (45) et traverses (44) de la galerie (43) ; une poignée (105) tirant le chariot (68) de fixation de la clavette (66) de verrouillage maintenant clavetée la tête de centrage (58) par l'effet d'un ressort (107) sur a plaque (55) d appui, permet d'étirer le ressort (107) et libérer ladite tête de centrage (58) pour désaccoupler l'avant de la remorque (1) et le véhicule tracteur (11).

10. Remorqué (1) selon la revendication 1, caractérisée en ce que le panneau arrière (7) de ladite remorque (1) est relevable et maintenu en position relevée par au moins deux poteaux (9) ; sous le pourtour dudit panneau relevé (7), un auvent en toile (29) est alors suspendu à l'aidé d'attachés (8) afin d assurer l'étanchéité au sol (30) de la toiture et des trois côtés, ou quatre dudit auvent (29) ; il est également prévu que lorsque le panneau (7) reste fermé sur la face arrière de la remorque (1), ledit panneau (7) est alors remplacé par une structure formant un cadre compose d'au moins trois tubes appuyés sur les deux poteaux (9) pour que l'on suspende aux tubes, par les attaches (8) et au moyen d'une fixation transversale au niveau de l'articulation supérieure (31) du panneau (7), le même auvent de toile (29) ; sous le pourtour de la partie avant (5) de la remorque (1) le même type de montage d auvent de toile (29) est possible lorsque le véhicule tracteur (11) est désolidarisé et éloigné de la remorque (1) stabilisée au sol sur des pieds (35) rabattables sous la carrosserie (33), dans la position route.

## Claims

1. Trailer (1) equipped with a main towing device (2), combined with a flexible coupling device to fasten the front part (5) of the aforesaid trailer (1) to the roof (51) of the aforesaid motor vehicle (11) by means of a transverse and vertical centering device (58) which slides from front to rear in sliding rails (53/111), trailer (1) characterized by the fact that :
- the main towing device (2), mounted on the trailer (1) and composed of one or two arms (20) which are hinged at one end on a pivot shaft (21) and fastened at the other end to the body (13) that carries the towing head (3), can travel up and down,
- the sliding device of the shaft (21) of the main towing device (2), which travels forward or backward, enables the towing head (3) to shift either in the vertical and longitudinal midplane (6) of the trailer (1), or to the left or to the right of the vertical midplane (6), placing the aforesaid shaft (21) slantwise (39 and 40 respectively) with respect to the perpendicular of the aforesaid plane (6), thus making it easier to lodge the aforesaid head (3) on the tow-ball (4) of the motor vehicle (11),
- the locking device of the pivot shaft (21) of the main towing device (2) is a device fixed to the chassis (27) which may consist of a screw (41) or a lock (95) which effectively maintains the aforesaid shaft (21) in position when the trailer (1) is hitched onto the vehicle (11) for driving,
- the centering device comprises a centering head (58) fixed to the front part (5) of the trailer (1) which is keyed in road position on a bearing plate (55) equipped with a hole (57/81) and fixed to the roof-rack (43) mounted on the roof (51) of the motor vehicle (11), the aforesaid centering device being completed by a sliding device composed of two sliding rails (53/111) fixed either to the bearing plate (55) or to the centering head (58), enabling, with respect to the aforesaid motor vehicle (11), forward or backward movement of the aforesaid trailer (1), either caused by the action of their respective individual suspensions, by the movement of the trailer (1) due to the action of the overrunning brake piston (16), or by the hand operated shifting of the plate (55) in the sliding rails (53/111) before the aforesaid trailer (1) is positioned on the roof-rack (43) of the aforesaid vehicle (11).

2. Trailer (1) according to patent claim 1, characterized by the fact that the centering head (58) body (63) has a conical shape and consists of several zones :
- a conical zone (62) at the free end of the body (63), which makes it easier to enter the cone (62) base (64), whose diameter is slightly inferior to that of the hole (57/81), into the hole (57/81) of the bearing plate (55) fixed to the roof-rack (43),
- a grooved zone (65/78) for receiving the key(s) (66/75/79) that interlock(s) the centering head (58) fixed to the front part of the trailer (5) with the bearing plate (55) fixed to the roof-rack (43) of the motor vehicle (11), the height of the groove (65) being slightly superior to the thickness of the keys (66/75/79) mounted on the plate (55), with, in addition, the thickness of the aforesaid plate (55) in the case of the keys (66/75/79) being mounted underneath the plate (55), in the groove (78).
- a bearing zone (67) of the centering head (58) body (63) whose diameter is superior to the notch (88) of the key(s) (66/75/79) and to the hole (57/81) in the bearing plate (55) fixed to the front part (5) of the trailer (1).
- a zone made of elastic material (61) fixed with one face to the body (63) of the towing head (3) and with the other face to a seat (59) bolted on the front part (5) of the trailer (1) through intermediate wedges (60) to allow height adjustment; this combination allows slantwise movement in longitudinal front/rear and transverse left/right direction of the aforesaid trailer (1) with respect to the motor vehicle (11), without causing fatigue of the respective bodies, even when in strongly inclined position with respect to each other.

3. Trailer (1) according to patent claims 1 and 2, characterized by the fact that the body (63) keying device, which interlocks the towing head (58) with the plate (55) of the roof-rack (43), consists of two pliers-type keys (75 and 79), one of the keys (79) being fixed, and the other (75) hinged on a pivot (76) interlocked with the plate (55), on which it (75) pivots to close on a groove (78 or 65) which is either higher or less high according to whether the aforesaid keys are positioned underneath or above the plate (55) respectively, the diameter of the hole (57) into which the conical end (62) of the centering head (58) is entered, or of the passage (82) both through the hole (81) of the plate (55) and the notch (88) of the key, in the case of one key (79) being fixed, being slightly superior to the diameter of the cone (62) base (64), the holes (57 or 81) pierced in the plate (55) themselves having, in all cases, a diameter inferior to the diameters of the different bearing zones (67 or 80) of the centering head (58) body (63) ; the keys (75) are maintained in centering-head-(58)-locked-in-the-groove-(65/78)-position by a mechanical device, for example a hook (77) which interlocks the aforesaid keys in road position.

4. Trailer (1) according to patent claims 1 to 3, characterized by the fact that the bearing device of the front part (5) consists of a special roof-rack (43), composed of crossbars (44) mounted, perpendicular to its longitudinal axis (52), on the roof (51) of the motor vehicle (11) by means of metal lugs (46 or 83) bolted in the entrance of the doors (48), or by means of counter-lugs (49) bolted underneath the gutters (50), and whose (43) bearing plate (55), equipped with the hole (57/81) for lodging the centering head (58) of the trailer (1), is fixed to sliding rails (53) mounted on struts (45) that are fixed perpendicular to the crossbars (44), the keying of the centering head (58) on the plate (55) being performed by means of either a horseshoe-type key (66) which slides in right angles to the longitudinal axis (52) of the roof-rack, by means of a slide (68) which passes through guides (69) and is shifted by means of a screw (70) fixed to a connecting bar (74) fastened to the reinforcing pieces (56) of the plate (55), or a pliers-type key composed of two elements (75/79) interlinked either above (Fig. 6) or underneath (Fig. 7) the bearing plate (55) by a hinge pin (76), and closing on the groove (65/78) of the centering head (58) body (63), the key elements (75/79) being locked in road position by a mechanical device that may consist of a hook (77) ; the sliding rails (53) fixed to the roof-rack (43) consist of an element (54) which slides freely through a C-section (87), by means of self-lubricating materials, rollers or ball bearings ; a handle (86) fixed to the plate (55) through the fixed key (79) for example, serves to hand operate the sliding of the plate (55) with a view to positioning the hole (57/81) in the aforesaid plate (55) opposite the conical end (62) of the centering head (58), thus making it easy, on the one hand to lodge the aforesaid head (58) in the hole (57/81) of the plate (55), and, on the other hand, as the case may be, to fasten the front part (5) of the trailer (1) to the roof (51) of the motor vehicle (11) by means of the flexible centering head (58) fixing device, either before or after having lodged the head (3) of the main towing device (2) of the aforesaid trailer (1) on the ball (4) of the tow-hook mounted at the back of the aforesaid vehicle (11) ; the roof-rack (43) is mounted on the roof (51) of the motor vehicle (11) either by means of lugs (46) welded to the crossbars (44) or, as an alternative, by means of lugs (83) bolted in slots (85) pierced in the edge of the crossbar (44), to allow adjustment with respect to roof (51) width ; the aforesaid crossbar (44) is also equipped with rings (84) intended for receiving straps to attach goods or for example a sail-board on the roof-rack when the vehicle (11) is used without the trailer (1) hitched onto it.

5. Trailer (1) according to patent claim 1, characterized by the fact that the main towing device (2) can swing up and down through one or two arms (20) that connect the body (13) and the towing head (3) with a pivot shaft (21) which slides freely, either forward or backward parallel to a line perpendicular to the vertical midplane (6) of the chassis (27), or slantwise with respect to the aforesaid line and farther backwards on the left (line 39), or farther backwards on the right (line 40), the free sliding of the shaft (21) which enables the towing head (3) to shift from front to rear or from left to right, being made possible by two metal parts equipped with elongated holes or slots (34) placed at the shaft (21) ends and fixed to the side rails of the chassis (27) by means of an axle shaft (28) or one or two struts (28).

6. Trailer (1) according to patent claim 1 characterized by the fact that the forward/backward sliding device of the pivot shaft (21), that enables the arms (20) of the main towing device (2) to swing up and down, consists of two longitudinal rails (89), preferably C-section rails, in which travel either sliding blocks (113) or rollers (90) fixed in pairs to bottom plates (91), the aforesaid sliding blocks (113) or bottom plates (91) being fixed to the pivot shaft (21).

7. Trailer (1) according to patent claims 1 to 6, characterized by the fact that the locking device, which locks the pivot shaft (21) of the main towing device (2) in road position, i.e. slid in back stop position, consists of locks (95) maintained in place by a spring (99), the unlocking being performed by means of a handle (100) or a pedal which acts upon levers (101/102) and/or rods, that release the locks (95).

8. Trailer (1) according to patent claims 1, 6 and 7, characterized by the fact that after the unlocking of the main towing device (2), once the handle (100) has been released after a slight forward movement of the bottom plate (91) or the sliding block (113), a wedge-type part (114) pivots or slides into place by the action of a spring (116) and prevents the locks (95) from passing through the rails (89), thus enabling the main towing device (2) to slide right and left and making it easy to hook the towing head (3) on or off the tow-ball (4) of the motor vehicle (11), the main towing device (2) being automatically locked when, through the backward sliding movement of this device (2), the end (117) of the bottom plate (91) or the sliding block (113) comes in back stop position against the rear safety end (93) and at the same time comes to rest against the wedge-type part (114) by extending the spring (116) which acts upon the aforesaid part (114), shifting it and causing the automatic transverse movement of the locks (95) which lock the towing device (2) in road position by means of the locking spring (99) that maintains the aforesaid locks (95) in locked position.

9. Trailer (1) according to patent claim 1, characterized by the fact that the sliding device of the centering head (58) fixed to the front part (5) of the trailer (1) is not fastened to the roof-rack (43) of the motor vehicle (11), but fixed on a support (108) mounted on sliding blocks (109), that are either self-lubricating or equipped with balls or rollers, and slides in sliding rails (111) fixed to the structure (110) of the front part (5) of the trailer (1); a handle (112) enables to easily shift the centering head (58) in the sliding rails (111) to put the aforesaid head (58) opposite the hole (57/81) of the plate (55) equipped with the key (66) fixed to the roof-rack (43) of the motor vehicle (11), or to shift the front part (5) of the aforesaid trailer (1) in transverse direction to put the centering head (58) in line with the axis (52) of the hole (57/81) ; the bearing device that supports the front part (5) of the trailer (1) on the motor vehicle (11) is a special roof-rack (43) whose bearing plate (55), in which a hole (57/81) has been pierced to lodge the centering head (58), is rigidly fixed to the struts (45) and crossbars (44) of the roof-rack (43) ; a handle (105) pulls the slide (68) that locks the key (66) on the centering head (58), by extending the spring (107) on the bearing plate (55), thus unlocking the aforesaid centering head (58) and enabling the trailer (1) to be hitched off the motor vehicle (11).

10. Trailer (1) according to patent claim 1, characterized by the fact that the rear panel (7) of the aforesaid trailer (1) can be lifted and maintained in lifted position by at least two poles (9) ; from the lower circumference of the aforesaid lifted panel (7) a tent canopy (29) may be suspended by means of fasteners (8) to ensure tightness on the ground (30) underneath the shelter of the roof and the three, or four, sides of the aforesaid tent canopy (29) ; the panel (7) may also remain closed on the rear face of the trailer (1), in which case the aforesaid panel (7) is replaced with a framework composed of at least three bars resting on the two posts (9) from which the same tent canopy (29) is suspended by means of the fasteners (8) and a transverse fixing device level with the upper hinges (31) of the panel (7) ; from the lower circumference of the front part (5) of the trailer (1) the same type of tent canopy (29) assembly may be suspended once the motor vehicle (11) has been unhooked and moved away from the trailer (1) which is then supported by posts (35) that can be folded away in road position underneath the trailer body (33).

## Patentansprüche

1. Anhänger (1), bestehend aus einer Hauptkupplungsvorrichtung (2),kombiniert mit der elastischen Befestigungseinrichtung an der Vorderseite (5) des genannten Anhängers (1) auf dem Dach (51) des Zugfahrzeuges (11) durch eine Zentrierungseinrichtung (58) senkrecht und quer wirkend, von vorn nach hinten auf Schienen (53/111) gleitend, Anhänger (1) dadurch charakterisiert dass:
Die Hauptkupplungsvorrichtung (2), mit dem Anhänger (1) fest verbunden, gebildet aus einem oder zwei Armen (20) auf dereinen Seite sich an einem Drehstab (21) drehend und an der anderenSeite mit dem Körper (13) am Anhängekopf (3) verbunden, ist von obennach unten beweglich gemacht,
Die Gleiteinrichtung des Drehstabes (21) der Hauptkupplungsvorrichtung (2), von vorne nach hinten wirkend, bewegtden Anhängekopf (3) auf senkrechter und Längs-Ebene (6) des Anhängers (1) oder aber mehr nach links oder mehr nach rechts der senkrechten Ebene, der beschriebene Drehstab (21) stellt sich schräg(39 und 40) in Bezug auf die beschriebene Ebene (6), und erleichtert somit das Anhängen des beschriebenen Kopfes (3) an die Kugel (4) des Zugfahrzeugs (11) beim Ankuppeln.
Die Blockiereinrichtung des Drehstabes (21) der Hauptkupplungsvorrichtung (2) ist eine am Chassis (27) angebrachte Vorrichtung, die eine Schraube (41) oder eine Verriegelung (95) sein kann, die den beschriebenen Drehstab (21) wirkungsvoll in Stellung hält wenn der Anhänger (1) für den Strasseneinsatz am Zugfahrzeug(11) angekuppelt ist,
Die Zentriereinrichtung beinhaltet einen Zentrierkopf (58), an der Vorderseite (5) des Anhängers (1) angebracht, der für den Einsatz auf der Strasse auf einer durchbohrten (57/81), an einemTräger (43), auf dem Dach (51) des Zugfahrzeugs (11) angebrachten Auflageplatte (55) verkeilt ist, die genannte Zentriereinrichtung ist vervollständigt mit einer Gleitvorrichtung (53/111) entweder an der Auflageplatte (55) oder am Zentrierkopf (58) angebracht, die inBezug auf das beschriebene Zugfahrzeug (11) Vor- und Rückbewegungen des beschriebenen Anhängers (1) gestatten, die durch den jeweiligen Federweg verursacht werden oder durch die Bewegungen des Anhängers unter Einfluss des Kolbens (16) der Auflaufbremse, oder die manuelle Verstellung auf den Profil-Schienen (53/111) der Platte (55) oder des Zentrierkopfes (58) vor dem Aufsetzen des beschriebenen Anhängers (1) auf den Träger (43) des beschriebenen Zugfahrzeugs (11),

2. Anhänger gemäss Anspruch 1, dadurch charakterisiert dass der Körper (63) des zylinderförmigen Zentrierkopfes (58) verschiedene Zonen beinhaltet :
- Eine konische Zone (62) am freien Ende des Körpers (63), die das Einfügen des Konus (62), dessen Durchmesser etwas geringer ist als das Loch (57/81), in das Loch (57/81) der Auflageplatte (55) des Trägers (43) der Basis (64), erleichtert.
- Eine genutete Zone (65/78) die zur Aufnahme des oder der Keile (65/75/79) vorgesehen ist, den Zentrierkopfes (58) an der Vorderseite des Anhängers (5), auf die Auflageplatte (55) des Trägers (43) des Zugfahrzeugs (11) verbindend, die Höhe der Nute (65) ist etwas grösser als die Stärke der auf der Platte (55) montierten Keile (66/75/79), mit ausserdem der Stärke der beschriebenen Platte (55) für den Fall von Keilen (66/75/79), die unter der Platte (55) in die Nute (78) montiert sind.
Eine Auflagezone (67) des Körpers (63) des Zentrierkopfes (58), deren Durchmesser etwas grösser ist als die Kerbe (88) des/oder der Keile (66/75/79) und dem Loch (57/81) der Auflageplatte (55) der Vorderseite (5) des Anhängers (1).
Eine Zone aus elastischem Material (61) auf einer seiner Seiten am Körper (63) des Kupplungskopfes (3) befestigt und auf seienr anderen Seite auf einem Sockel (59) befestigt, die mit der Vorderseite (5) des Anhängers (1) verschraubt ist, durch Unterlagscheiben ist eine Höhenregelung möglich, die Einheit erlaubt Neigungsbewegungen in Längsrichtung vor/zurück und in Querrichtung links/rechts, des beschriebenen Anhängers (1) in Bezug auf das Zugfahrzeug (11) ohne Ermüdung der jeweiligen Karosserien, selbst bei starken Verwindungen gegeneinander.

3. Anhänger (1) gemäss Ansprüchen 1 und 2, dadurch charakterisiert, dass die Verkeilvorrichtung des Körpers (63), die den Kupplungskopf (58) mit der Platte (55) des Trägers (43) verbindet, aus zwei Keilen in Zangenform (75 und 79) besteht, einer der Keile (79) ist fest, und der andere (75) drehbar auf einer mit der Platte (55) verbundenen Achse (76), um sich in eine Nute (78 oder 65) einzufügen, die mehr oder weniger hoch ist, je nachdem ob die beschriebenen Keile über oder unter der Platte (55) positioniert werden, der Durchmesser des Loches (57) in welches sich das konische Ende (62) des Zentrierkopfes (58) einfügt, oder im Falle eines feststehendes Keiles (79) der Durchlass (82), sowie im Loch (81) der Platte (55) als auch in der Kerbe (88) des Keiles, ist leicht grösser als der Durchmesser der Basis (64) des Konus (62), die Löcher (57 oder 81), die in die Platte (55) gebohrt sind, sind in allen Fällen in einem kleineren Durchmesser ausgeführt als der Durchmesser der verschiedenen Auflagezonen (67 oder 80) des Körpers (63) des Zentrierkopfes (58); die Keile (75) werden, bei verkeiltem Zentrierkopf (58), durch eine mechanische Vorrichtung in der Nute (65/78) festgehalten, z.B.: Ein Haken (77) der die beschriebenen Keile bei Fahrbereitschaft verbindet.

4. Anhänger (1) gemäss Ansprüchen 1 bis 3, dadurch charakterisiert, dass die Auflagemöglichkeit seiner Vorderseite (5) ein Spezialträger (43) ist, aus Querträgern (44) gebildet, die mit dem Dach (51) des Zugfahrzeugs (11) fest verbunden sind durch angeschraubte rechtwinklig zu seiner Längsachse (52) stehenden metallischen Pratzen (46 oder 83) in den Türöffnungen (48), oder durch eine Gegen-Platine (49) unter den Dachrinnen (50) befestigt, und deren durchlochte (57/81) Auflageplatte (55) zur Aufnahme des Zentrierkopfes (58) des Anhängers (1) an Gleitschienen (53) angebracht ist, die durch Verstrebungen (45) rechtwinklig an den Querträgern (44) befestigt sind, die Verkeilung des Zentrierkopfes (58) auf der Platte (55) geschieht durch entweder einen offenen hufeisenförmigenKeil (66) quer verschiebbar zur Längsachse (52) des Trägers mittels einem in Führungen (69) laufenden Schlitten (68), bewegbar durch eine Schraube (70) an einerU-förmigen Stange (74) die an den Verstärkungen (56) der Platte (55) angebracht ist, oder durch eine aus zwei Keil-Elementen (75/79) in Zangenform bestehenden Vorrichtung über (Fig. 6) oder unter (Fig. 7) der Auflageplatte (55) angebracht und durch eineAchse (76) verbunden, und sich in die Nute (65/78) des Körpers (63)des Zentrierkopfes (58) einführend, die Heile (75/79) werden in Fahrstellung durch eine mechanische Vorrichtung festgehalten, die ein Haken (77) sein kann; die Gleitschienen (53) des Trägers (43) bestehen aus einem Element (54), das durch Einsatz selbstschmierender Mittel, Rollen oder Kugeln in einem C-förmigen Profil (87) frei gleitet; ein Griff (86) an der Platte (55), angebracht mit Hilfe, z.B. des feststehenden Keiles (79), dient als manueller Antrieb zum Gleiten der Platte (55), um das Loch (57/81) in der genannten Platte (55) gegenüber das konische Ende (62) des Zentrierkopfes (58) zu bringen, dies erleichtert einerseits das Einsetzen des genannten Kopfes (58) in das Loch (57/81) der Platte (55) und andererseits, wahlweise, erleichtert somit die elastische Befestigung des Zentrierkopfes (58) der Vorderseite (5) des Anhängers (1) auf dem Dach (51) des Zugfahrzeugs (11) vor oder nach dem Ankuppeln des Kopfes (3) der Hauptanhängekupplung (2) des beschriebenen Anhängers (1) auf die Kugel (4) des hinteren Hakens des beschriebenen Zugfahrzeugs (11); der Träger (43) ist mit dem Dach (51) des Zugfahrzeugs (11) durch verschweisste Pratzen (46) oder als Variante durch verschraubte Pratzen (83) in Langlöchern (85) am Rand der Verstrebung (44) verbunden, um eine Einstellung zur Breite des Daches (51) zu ermöglichen; die beschriebene Verstrebung (44) ist gleichzeitig mit Ringen (84) versehen, die Befestigung von Waren oder z.B. eines Surfbrettes durch Gurte erlauben solange das Fahrzeug (11) ohne Anhänger (1) fährt.

5. Anhänger (1) gemäss Anspruch 1, dadurch charakterisiert, dass die Hauptkupplungsvorrichtung (2) von oben nach unten durch einen oder zwei Arme (20) drehbar ist, die den Körper (13) und den Anhängekopf (3) mit einem Drehstab (21) verbinden, der entweder nach vorne oder nach hinten frei gleitet, parallel zu einer Linie rechtwinklig zur senkrechten Mittel-Ebene (6) des Chassis (27), oder schräg auf die genannte Linie und mehr nach hinten links (Linie 39) oder mehr nach hinten rechts (Linie 40), dieses freie Gleiten des Drehstabes (21), das Vor/Zurück und Links/Rechts-Bewegung des Anhängekopfes (3) gestattet, wird ermöglicht durch zwei metallische Teile die mit Löchern oder Langlöchern (34) versehen sind und sich an den Enden des Drehstabes (21) befinden, diese sind mit den Längsträgern des Chassis (27) durch einen Achskörper (28) oder einem oder zwei Zwischenstücken (28) verbunden.

6. Anhänger (1) gemäss Anspruch 1, dadurch charakterisiert, dass der Drehstab (21) für die Auf- und Abbewegung der Arme (20) der Hauptkupplungsvorrichtung (2) nach vorne oder nach hinten gleitet mit Hilfe von zwei Längsschienen (89), vorzugsweise in C-Form, in denen Kufen (113) oder Rollen (90) paarweise an Platinen (91) angebracht gleiten, die beschriebenen Kufen (113) oder Platinen (91) sind fest an den Drehstab (21) angebracht.

7. Anhänger (1) gemäss Ansprüchen 1 und 6, dadurch charakterisiert, dass die Gleit-Blockierungvorrichtung des Drehstabes (21) der Hauptkupplungsvorrichtung (2) in Fahrbereitschaft am hinteren Gleit-Anschlag durch Verriegelungen (95) gewährleistet ist, die durch eine Feder (99) gehalten werden, die Entriegelung geschieht durch eine Betätigung eines Griffes (100) oder eines Pedales, die durch Hebel (101/102) und/oder Stangen das Ausrasten der Verriegelung (95) ermöglichen.

8. Anhänger (1) gemäss Ansprüchen 1, 6 und 7, dadurch charakterisiert, dass nach der Entriegelung der Gleitvorrichtung der Hauptkupplungsvorrichtung (2) und nachdem der Griff (100) freigegeben ist nach einer leichten Vorwärtsbewegung der Platine (91) oder der Kufe (113), eine Sperrung (114) wird durch Drehung oder Verschieben durch eine Feder (116) verstellt und den Verschluss (95) hindert die Schienen zu überqueren was eine Gleiten sowohl nach rechts als auch nach links der Hauptkupplungsvorrichtung (2) erlaubt, um das Ab- oder Anhängen des Anhängekopfes (3) auf die Kugel (4) des Zugfahrzeugs (11) zu erleichtern, die Verriegelung der Hauptkupplungsvorrichtung (2) geschieht automatisch, wenn durch Verschieben der Kupplung (2) nach hinten die Platine (91) oder die Kufe (113) mit ihrem Ende (117) an das hintere Sicherheitsstück (93) anschlägt und gleichzeitig sich auf die Sperrung (114) aufstützt und die Sperrfeder (116) der genannten Sperrung (114) spannend, die sich dadurch verstellt, und somit automatisch die Querbewegung der Verriegelungen (95) unter Einwirkung der Rückhaltefedern (99) bei Fahrstellung auslösst.

9. Anhänger (1) gemäss Anspruch 1, dadurch charakterisiert, dass die Gleitvorrichtung des Zentrierkopfes (58) an der Vorderseite (5) des Anhängers (1) nicht fest mit dem Träger (43) des Zugfahrzeugs (11) verbunden ist, sondern auf einem Support (108) angebracht ist, der auf Kufen (109) aus selbstschmierenden Material montiert ist, oder mit Kugeln oder Rollen versehen, und in mit der Struktur (110) der Vorderseite (5) des Anhängers (1) fest verbundenen Schienen (111) gleitet, ein Griff (112) erlaubt den Zentrierkopf (58) leicht auf den Schienen (111) zu verstellen, um den Zentrierkopf (58) und das Loch (57/81) der Keil (66)-Auflageplatte (55) des Trägers (43) des Zugfahrzeugs (11) gegenüberzustellen, oder die Vorderseite (5) des beschriebenen Anhängers (1) seitlich zu bewegen, um den Zentrierkopf (58) mit der Längsachse (52) des Loches (57/81) auf eine Linie zu bringen; das Auflageelement der Vorderseite (5) des Anhängers (1) auf das Zugfahrzeug (11) ist ein Spezialträger (43), dessen für den Zentrierkopf (58) mit dem Loch (57/81) durchbohrte Auflageplatte (55) fest an Verstrebungen (45) und Querträgern (44) befestigt ist, ein Griff (105), der den Schlitten (68) der Keilverriegelungen (66) für den Halt des Zentrierkopfes (58) durch Feder (107) auf der Auflageplatte (55), zieht, erlaubt die Feder (107) zu spannen und gibt den beschriebenen Zentrierkopf (58) frei zur Entkupplung des Anhängers (1) und des Zugfahrzeugs (11).

10. Anhänger (1) gemäss Anspruch 1, dadurch charakterisiert, dass die Rückwand (7) des beschriebenen Anhängers (1) hochstellbar ist und in hochgestellter Stellung durch wenigstens zwei Stangen (9) gehalten wird; ein Vordach (29) aus Stoff um die hochgestellte Rückwand (7) herum wird mittels Halterungen (8) gehalten, um das Abdichten am Boden (30) des Daches und der drei oder vier Seiten des genannten Vordachs (29) zu garantieren; es ist ebenfalls vorgesehen, dass bei auf der Rückseite des Anhängers (1) geschlossener Rückwand (7) die beschriebene Rückwand (7) dann durch eine Struktur ersetzt wird, die einen Rahmen aus wenigsten drei Rohren bildet, der sich dann auf die zwei Stangen (9) abstützt, damit an die Rohre, mittels der Befestigungen (8) und einer Querbefestigung in Höhe des oberen Gelenkes (31) der Rückwand (7) das beschriebene Stoff-Vordach (29) aufgehängt werden kann; unter dem Umkreis der Vorderseite (5) des Anhängers (1) ist die selbe Montage des Vordaches (29) gegeben, wenn das Zugfahrzeug (11) vom Anhänger (1) entfernt ist, und der Anhänger durch, in Fahrbereitschaft hochgeklappte, Stützfüsse stabilisiert ist.
